# EUROPEAN PATENT APPLICATION

(11) **EP 4 210 139 A2**
(43) Date of publication of application: **12.07.2023**
(21) Application number: 23150630.4
(22) Date of filing: 06.01.2023
(51) Int. Cl.: H01M 10/04, H01M 50/152, H01M 50/342

(54) **SECONDARY BATTERY**

(30) Priority: 07.01.2022 KR 20220002679
(71) Applicant: Samsung SDI Co., Ltd., Yongin-si, Gyeonggi-do 17084 (KR)
(72) Inventor: KIM, Shin Jung, 17084 Yongin-si (KR); KIM, Dae Kyu, 17084 Yongin-si (KR); PARK, Jong Jun, 17084 Yongin-si (KR)
(74) Representative: Marks & Clerk LLP

(57) **Abstract**

The present disclosure provides a secondary battery capable of improving safety by discharging internal gas while preventing deformation of a cap plate including a vent unit when pressure inside the case increases. In an example, disclosed is a secondary battery comprising: a cylindrical case; an electrode assembly accommodated in the cylindrical case; and a cap plate electrically connected to the electrode assembly and sealing the cylindrical case, wherein the cap plate includes a first flat portion that is located at the center, a second flat portion that is located outside the first flat portion, and a vent portion that is located between the first flat portion and the second flat portion and has a smaller thickness than the thickness of the first or second flat portion.

## Description

### BACKGROUND

### 1. Field

The present disclosure relates to a secondary battery.

### 2. Description of the Related Art

Lithium ion secondary batteries are used as power sources for portable electronic devices as well as hybrid vehicles or electric vehicles because of advantages, for example, their high operating voltage and high energy density per unit weight.

These secondary batteries may be classified into cylindrical, prismatic, or pouch-shaped shapes. For example, a cylindrical secondary battery generally includes a cylindrical case, a cylindrical electrode assembly coupled to the case, an electrolyte (optional) injected into the case to enable movement of lithium ions, and a cap assembly that is coupled to one side of the case to prevent leakage of the electrolyte and prevents separation of the electrode assembly.

The above information disclosed in this Background section is only for enhancement of understanding of the background of the invention and therefore it may contain information that does not constitute prior art.

### SUMMARY

The present disclosure provides a secondary battery capable of improving safety by discharging internal gas while preventing deformation of a cap plate including a vent unit when pressure inside the case increases.

A secondary battery according to the present disclosure may include: a cylindrical case; an electrode assembly accommodated in the cylindrical case; and a cap plate electrically connected to the electrode assembly and sealing the cylindrical case, wherein the cap plate may include a first flat portion that is located at the center, a second flat portion that is located outside the first flat portion, and a vent portion that is located between the first flat portion and the second flat portion and has a smaller thickness than the thickness of the first or second flat portion.

The first flat portion may have a thickness of 0.7 mm to 0.9 mm.

In this way, the present disclosure may provide a secondary battery capable of securing a welding margin by limiting the thickness of the first flat portion located at the center of the cap plate.

The height of an upper surface of the second flat portion may be greater than the height of an upper surface of the first flat portion.

A height difference between the first flat portion and the second flat portion may be 0.1 mm to 0.4 mm.

In this way, the present disclosure may provide a secondary battery capable of improving an operating pressure distribution of the cap plate when the pressure inside the case increases by giving a height difference between the first flat portion and the second flat portion of the cap plate.

An electrode tab of the electrode assembly may be electrically connected to the lower surface of the first flat portion.

The upper surface of the first flat portion may be exposed to the outside.

The vent portion may include a notch formed on the lower surface thereof.

The vent portion may be formed to be inclined.

An insulating gasket interposed between the second flat portion and the cylindrical case may be further included.

At least some of the above features that accord with the invention and other features according to the invention are set out in the claims.

### BRIEF DESCRIPTION OF DRAWINGS

FIG. 1 is a perspective view illustrating a secondary battery according to an embodiment of the present disclosure.
FIG. 2 is a cross-sectional view of a secondary battery according to an embodiment of the present disclosure.
FIG. 3 is an enlarged cross-sectional view of a cap plate in the secondary battery according to an embodiment of the present disclosure.
FIGS. 4A and 4B are schematic views illustrating a method for manufacturing a cap plate in the secondary battery according to an embodiment of the present disclosure.

### DETAILED DESCRIPTION

Hereinafter, a preferred embodiment of the present disclosure will be described in detail with reference to the accompanying drawings.

Examples of the present disclosure are provided to help to explain the present disclosure to those skilled in the art, and the following examples may be modified in various other forms. The present disclosure, however, may be embodied in many different forms and should not be construed as being limited to the example embodiments set forth herein. Rather, the scope of the present disclosure is defined by the claims.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

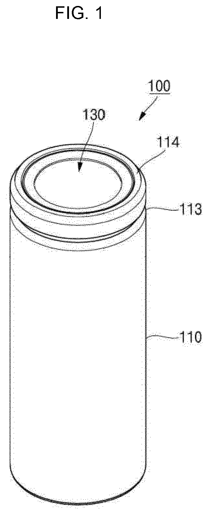

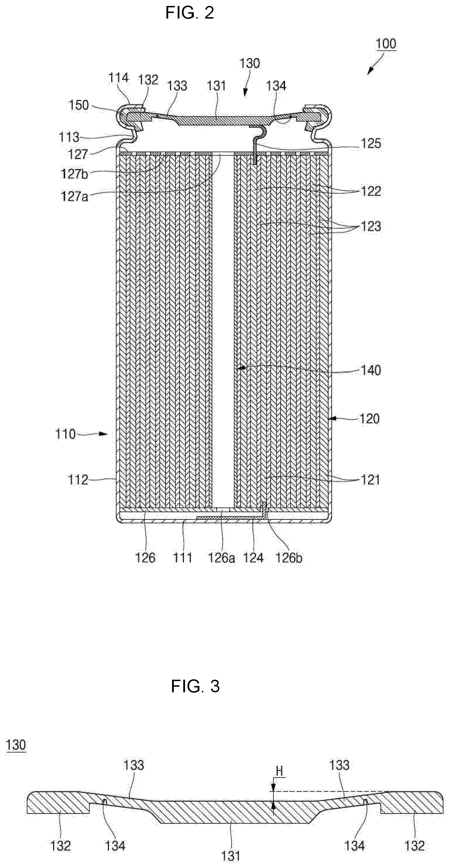

FIG. 1 is a perspective view illustrating a secondary battery according to an embodiment of the present disclosure. FIG. 2 is a cross-sectional view of a secondary battery according to an embodiment of the present disclosure. FIG. 3 is an enlarged cross-sectional view of a cap plate in the secondary battery according to an embodiment of the present disclosure.

Referring to FIGS. 1 to 3, the secondary battery 100 according to an embodiment of the present disclosure may include a cylindrical case 110, an electrode assembly 120, and a cap plate 130.

The cylindrical case 110 may include a substantially circular bottom portion 111 and a sidewall 112 extending a predetermined length upward from the bottom portion 111. In some examples, cylindrical case 110 may include or be referred to as a can, a casing, or a housing.

During the manufacturing process of the secondary battery, the top portion of the cylindrical case 110 may be opened. Therefore, during the assembling process of the secondary battery, the electrode assembly 120 may be integrated into a single structure and inserted into the cylindrical case 110. Of course, the electrolyte may later be additionally injected into the cylindrical case 110.

The cylindrical case 110 may be made of steel, a steel alloy, nickel-plated steel, a nickel-plated steel alloy, aluminum, or an aluminum alloy.

Additionally, in order to prevent the cap plate 130 from escaping to the outside, the cylindrical case 110 may be provided with a beading part 113 recessed inward at a lower portion of the cap plate 130 and a crimping part 114 bent inward at an upper portion of the cap plate 130.

The electrode assembly 120 may be accommodated inside the cylindrical case 110. The electrode assembly 120 may include or be referred to as an electrode, an electrode group, or a jelly roll. The electrode assembly 120 may include a negative electrode plate 121 coated with a negative electrode active material (e.g., graphite, carbon, etc.), and a positive electrode plate 122 coated with a positive electrode active material (e.g., transition metal oxide (LiCoO₂, LiNiO₂, LiMn₂O₄, etc.)), and a separator 123 positioned between the negative electrode plate 121 and the positive electrode plate 122 to prevent a short circuit and to allow only the movement of lithium ions. The negative electrode plate 121, the positive electrode plate 122, and the separator 123 may be wound in a substantially cylindrical shape. In some examples, the negative electrode plate 121 may be a copper (Cu) foil, the positive electrode plate 122 may be an aluminum (Al) foil, and the separator 123 may be polyethylene (PE) or polypropylene (PP).

In addition, a negative electrode tab 124 protruding and extending downward by a predetermined length may be welded to the negative electrode plate 121, and a positive electrode tab 125 protruding and extending upward by a predetermined length may be welded to the positive electrode plate 122. In addition, the negative electrode tab 124 may be copper (Cu) or nickel (Ni), and the positive electrode tab 125 may be aluminum (Al).

In addition, the negative electrode tab 124 of the electrode assembly 120 may be welded to the bottom portion 111 of the cylindrical case 110. Thus, the cylindrical case 110 may operate as a negative electrode. In some examples, the negative electrode tab 124 may be ultrasonically welded to or laser welded to the bottom 111 of the cylindrical case 110. Alternatively, the positive electrode tab 125 may be welded to the bottom portion 111 of the cylindrical case 110, and in this case, the cylindrical case 110 may operate as a positive electrode.

In addition, a first insulating plate 126 coupled to the cylindrical case 110 and having a first hole 126a in the center and a second hole 126b outside thereof may be interposed between the electrode assembly 120 and the bottom portion 111. In some examples, the first insulating plate 126 prevents the electrode assembly 120 from electrically contacting the bottom portion 111 of the cylindrical case 110. In some examples, the first insulating plate 126 prevents the positive electrode plate 122 of the electrode assembly 120 from electrically contacting the bottom portion 111. In some examples, the first hole 126a allows the gas to quickly move upward through a center pin 140 when a large amount of gas is generated due to an abnormality of the secondary battery, and the second hole 126b allows the negative electrode tab 124 to pass through and be welded to the bottom portion 111.

In addition, a second insulating plate 127 coupled to the cylindrical case 110 and having a first hole 127a in the center and a plurality of second holes 127b on the outside thereof may be interposed between the electrode assembly 120 and the cap plate 130. In some examples, the second insulating plate 127 prevents the electrode assembly 120 from electrically contacting the cap plate 130. In some examples, the second insulating plate 127 prevents the negative electrode plate 121 of the electrode assembly 120 from electrically contacting the cap plate 130. In some examples, the first hole 127a allows the gas to quickly move to the cap plate 130 when a large amount of gas is generated due to an abnormality of the secondary battery, and the second hole 127b allows the positive electrode tab 125 to pass through and be welded to the cap plate 130. In addition, the remaining second holes 127b serve to allow an electrolyte to quickly flow into the electrode assembly 120 in the electrolyte injection process.

Additionally, the diameters of the first holes 126a and 127a of the first and second insulating plates 126 and 127 are smaller than the diameter of the center pin 140, so that the center pin 140 is prevented from electrically contacting the bottom portion 111 of the cylindrical case 110 or the cap plate 130 due to an external impact.

The center pin 140 has a shape of a hollow circular pipe and may be coupled to an approximate center of the electrode assembly 120. The center pin 140 may be made of steel, stainless steel, aluminum, an aluminum alloy, or polybutylene terephthalate, but the material is not limited to those listed herein. The center pin 140 serves to suppress deformation of the electrode assembly 120 during charging and discharging of the secondary battery and serves as a passage for gas generated inside the secondary battery.

The cap plate 130 seals the opening of the cylindrical case 110 to protect the electrode assembly 120 from the external environment, and when the internal pressure of the cylindrical case 110 is higher than a reference pressure (or the operating pressure of the cap plate), the cap plate 130 may be broken, and the internal gas of the cylindrical case 110 may be discharged to the outside. In some examples, the cap plate 130 may also serve as a positive electrode terminal. In some examples, the cap plate 130 may be made of aluminum or aluminum alloy.

Referring to FIG. 3, the cap plate 130 may include a first flat portion 131 that is substantially flat and located in the center, a second flat portion 132 that is located outside the first flat portion 131 and is substantially flat, and a vent portion 133 that is positioned between the first flat portion 131 and the second flat portion 132.

In some examples, the cap plate 130 may include or be referred to as a cap, a conductor plate, a bent plate, a cover, or a lid.

In some examples, thicknesses of the first flat portion 131 and the second flat portion 132 may have substantially similar or the same to each other.

The first flat portion 131 is located at the center of the cap plate 130, and the positive electrode tab 125 of the electrode assembly 120 may be welded to a lower portion thereof. In some examples, the lower surface of the first flat portion 131 may be ultrasonically welded to or laser welded to the positive electrode tab 125. In addition, the upper surface of the first flat portion 131 is exposed to the outside, i.e. it is part of the external surface of the battery, and may be electrically connected to an external device to serve as a terminal.

The first flat portion 131 may have a thickness of 0.7 mm to 0.9 mm. If the thickness of the first flat portion 131 is smaller than 0.7 mm, a pin hole may be generated during welding of the cap plate 130 and the positive electrode tab 125, thereby reducing the bonding force between the two. In addition, if the thickness of the first flat portion 131 is greater than 0.9 mm, deformation distribution may occur during welding of the cap plate 130 and the positive electrode tab 125, thereby degrading the quality of the secondary battery 100.

As such, the secondary battery 100 according to the present disclosure can secure a welding margin by limiting the thickness of the first flat portion 131.

The second flat portion 132 is positioned outside the first flat portion 131 and may be fixed to the cylindrical case 110 through an insulating gasket 150. The height of the second flat portion 132 may be higher than that of the first flat portion 131. An upper surface of the second flat portion 132 may be higher than an upper surface of the first flat portion 131 In other words, the upper surface of the second flat portion 132 and the upper surface of the first flat portion 131 are not located on the same plane. Accordingly, a height difference H is generated between the upper surface of the second flat portion 132 and the upper surface of the first flat portion 131. The height of a feature is defined as the distance of the feature from the bottom portion 111. The height difference between two features is defined as the difference of the respective heights of the two features.

As such, when the second flat portion 132 is formed to have a height greater than the first flat portion 131, the distribution of the operating pressure of the cap plate 130 may be enhanced and/or improved.

A height difference H between the upper surface of the second flat portion 132 and the upper surface of the first flat portion 131 may be 0.1 mm to 0.4 mm. If the height difference H between the upper surface of the second flat portion 132 and the upper surface of the first flat portion 131 is less than 0.1 mm or greater than 0.4 mm, deformation and breaking distribution of a part may occur during operating of the cap plate 130.

In some examples, the height difference H between the upper surface of the second flat portion 132 and the upper surface of the first flat portion 131 may be 0.15 mm to 0.35 mm. If the height difference H between the upper surface of the second flat portion 132 and the upper surface of the first flat portion 131 is 0.15 mm to 0.35 mm, deformation and breaking distribution as well as deformation distribution can be prevented from occurring during operating of the cap plate 130.

The vent portion 133 may be positioned between the first flat portion 131 and the second flat portion 132. The vent portion 133 may be provided to have a thickness smaller than the first flat portion 131 and the second flat portion 132. In some examples, the vent portion 133 may have a relatively smaller thickness than the first flat portion 131 and the second flat portion 132 by partially removing the lower surface of the cap plate 130. In some examples, the vent portion 133 may be shaped of a ring spaced a certain distance apart from the center of the cap plate 130.

In addition, the vent portion 133 may be provided to be inclined by the height difference H between the first flat portion 131 and the second flat portion 132. The vent portion 133 may further include a notch 134 formed at a predetermined depth on the lower surface. In some examples, the notch 134 may be formed in a continuous form along the lower surface of the vent portion 133.

In this way, when the internal pressure of the secondary battery 100 is greater than the operating pressure of the cap plate 130, the notch 134 of the vent portion 133 is broken, so that the gas inside the cylindrical case 110 is released to the outside, thereby improving the safety of the secondary battery 100.

In addition, the secondary battery 100 according to the present disclosure provides only the cap plate 130 as a component that seals the upper portion of the cylindrical case 110 and eliminates the existing component having a current blocking function, thereby reducing internal resistance and reducing the weight of the secondary battery 100.

The insulating gasket 150 may be interposed between the cap plate 130 and the cylindrical case 110. The insulating gasket 150 may insulate the cap plate 130 and the cylindrical case 110 from each other. In some examples, the insulating gasket 150 may cover the outer circumference of the second flat portion 132 of the cap plate 130. The outer surface of the insulating gasket 150 may be in close contact with the beading part 113 and the crimping part 114, and the inner surface of the insulating gasket 150 may be in close contact with the second flat portion 132. In some examples, the insulating gasket 150 may include or be referred to as a sealing gasket, an insulator, or resin.

The insulating gasket 150 may be made of a resin material, such as polyethylene (PE), polypropylene (PP), polyethylene terephthalate (PET), etc., but the material is not limited thereto.

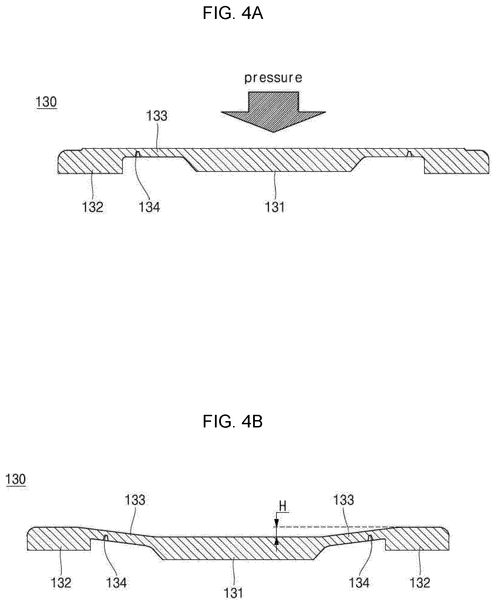

FIGS. 4A and 4B are schematic views illustrating a method for manufacturing a cap plate in the secondary battery according to an embodiment of the present disclosure. As shown in FIGS. 4A and 4B, for example, a cap plate 130 in which a first flat portion 131 and a second flat portion 132 are positioned on the same plane is provided, and pressure is applied to the first flat portion 131, thereby manufacturing the cap plate 130 in which the upper surface of the second flat portion 132 is higher than the upper surface of the first flat portion 131. In some examples, by increasing the thickness of a portion of the second flat portion 132 adjacent to the vent portion 133, the thickness of the second flat portion 132 extending downward together with the vent portion 133 when the first flat portion 131 is pressed can be compensated for.

As described above, the present disclosure provides a secondary battery capable of improving safety by discharging internal gas while preventing deformation of a cap plate including a vent portion when pressure inside the case increases.

While the foregoing embodiment is only one embodiment for carrying out the secondary battery according to the present disclosure, which is not limited to the embodiment, it will be understood by a person skilled in the art that various changes in form and details may be made therein without departing from the scope of the present disclosure as defined by the following claims.

## Claims

1. A secondary battery comprising:
a cylindrical case;
an electrode assembly accommodated in the cylindrical case; and
a cap plate electrically connected to the electrode assembly and sealing the cylindrical case,
wherein the cap plate includes a first flat portion that is located at the center, a second flat portion that is located outside the first flat portion, and a vent portion that is located between the first flat portion and the second flat portion, and wherein the vent portion has a smaller thickness than both a thickness of the first flat portion and a thickness of the second flat portion.

2. The secondary battery of claim 1, wherein the first flat portion has a thickness of 0.7 mm to 0.9 mm.

3. The secondary battery of claim 1 or claim 2, wherein a height of an upper surface of the second flat portion is greater than a height of an upper surface of the first flat portion.

4. The secondary battery of any preceding claim, wherein a height difference between the first flat portion and the second flat portion is 0.1 mm to 0.4 mm.

5. The secondary battery of any preceding claim, wherein an electrode tab of the electrode assembly is electrically connected to a lower surface of the first flat portion.

6. The secondary battery of any preceding claim, wherein the vent portion includes a notch formed on a lower surface thereof.

7. The secondary battery of any preceding claim, wherein the vent portion is formed to be inclined.

8. The secondary battery of any preceding claim, further comprising an insulating gasket interposed between the second flat portion and the cylindrical case.

9. The secondary battery of claim 1 or claim 2, wherein an upper surface of the first flat portion is exposed to the outside.

10. The secondary battery of any of claims 3 to 8, wherein the upper surface of the first flat portion is exposed to the outside.
